# EUROPEAN PATENT APPLICATION

(11) **EP 0 811 800 A1**
(43) Date of publication of application: **10.12.1997**
(21) Application number: 96830482.4
(22) Date of filing: 26.09.1996
(51) Int. Cl.: F16L 41/08, F16L 41/00

(54) **Mechanically tightening joint for connection to a main pipe**

(30) Priority: 06.06.1996 IT MI960424 U
(71) Applicant: Gigi Molina - Brevetti Plastici S.p.A., Romentino (Novara) (IT)
(72) Inventor: Molina, Luigi, 28100 Novara (IT)
(74) Representative: Mercurio, Franco

(57) **Abstract**

A mechanically tightening joint for connection to a main pipe (10) in which the latter presents on its surface a through aperture (11) to which said joint (12) is to be applied, said joint being provided with an aperture (13) to be coupled to aperture (11) of the main pipe (10), wherein the joint (12) is provided with mechanically tightening means (17) that can be operated from the outside of joint (12) and are suitable to secure the joint (12) and the main pipe (10) to one another.

## Description

The present invention relates to a mechanically tightening joint for connection to a main pipe, said joints being expecially suited for connection to sewage piping or for branching on industrial plants.

Joints with the following technical characteristics for connection to main or basis pipes are known:
- onto PVC pipings, which material belongs to the class of thermoplastic materials and can therefore be modified with the aid of a heat source, a hole used to be drilled on the main pipe, with heat a properly sized cuff for the inlet tube to be connected was formed, and the basis cuff was finally welded to the joint, both tubes being obviously of the same or a similar material in this case PVC.
- a simpler method was thereafter adopted, the so called saddle joint, with the creation of a pipe length covering more than half of the diameter of the base pipe and having the joint welded thereon or obtained by moulding withouth welding. In such a method it was enough to drill a hole in the main pipe and to fit the piece thereon as a whole in such a way that the same by reaching beyond halfway of the pipe would be in engagement relationship with the base pipe. In such a case, the feature of the material of the two pipes is that it should be the same for a welding or sticking between the saddle joint and the basis conduit to possibly occur. This normally occurs with PVC pipes.
- Still referring to the prior art, pipes of HDPE or polypropylene, where adhesive bonding is absolutely impossible, it was, and still is, necessary to use the welding system. It is to be noted that in the field of sewage systems HDPE and polypropylene are much less used than PVC.
- With stiff piping, such as ceramic stoneware, asbestos cement, prestressed concrete and similar pipes, a hole is drilled in the main pipe wherein the joint is fitted with the aid of a rubber gasket in order to possibly assure a perfect seal.
- For pipings made of spheroidal graphite cast iron or steel the main problem is drilling the hole in the pipe, steel at least allowing welding to be carried out whilst for the spheroidal graphite cast iron the only possible aid consists of more or less effective gaskets.

The above-mentioned joints used up to now have the draw-backs of requiring complicated expensive techniques, skilled personnel and considerable investiment in the production of moulds for the various size features of the joints and of the pipes they are to be connected to, and moreover it is not possible to assure a perfect seal between the pipes.

The joint that is the object of the present invention allows the above-mentioned draw backs to be eliminated, and provides the advantages that will be clearly set out in the following description of a simplified, non limiting, embodiment, with reference to the enclosed drawing, in which:

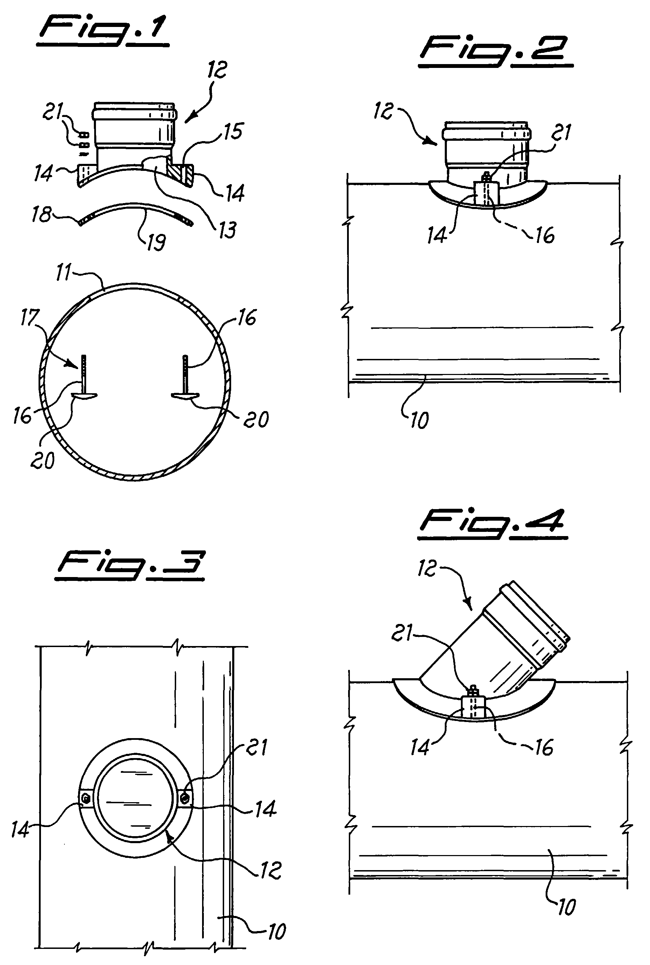

FIGURE 1 is an exploded view of the various parts of the joint and of the main pipe;
FIGURE 2 is a front view of the joint as applied to the main pipe;
FIGURE 3 is a top view of the joint as applied to the main pipe; and
FIGURE 4 is a side view of the joint as applied to the main pipe.

As can be seen from the figures, the main pipe 10 has a through aperture 11 on its surface, to which aperture the joint 12 is applied, joint 12 being provided with aperture 13. Said joint 12, that can be arranged at any angle or in any position relative to the main pipe 10, comprises two blocks 14 that are each provided with a through-hole 15 through which a threaded pin 16 is placed, said pin being provided with mechanically tightening means 17 that are suited to secure the joint 12 to the main pipe 10. The number of said blocks might be higher than two, according to the dimensions of the joint and of the main pipe. Between the joint 12 and the main pipe 10 a gasket 18 is interposed, said gasket having a central aperture 19 that is suited to be interposed between aperture 13 of joint 12 and aperture 11 of the main pipe 10.

The mechanical tightening means 17 comprise: a tab 20 secured at an end of each of said threaded pins 16 and a screw nut or double screw nut 21 coupled to the other end of said pins 16, so that each tab 20 is placed against the inner part of the main pipe 10 and is suited to tighten the latter against the joint 12 by tightening from outside the screw nut or double screw nut 21 on pins 16 against the upper part of said blocks 14.

Said tightening means is comfortably and easily used because the control screw nut or double screw nut 21 is arranged in an easily accessible region outside of blocks 14.

From the above description, the various advantages offered by the joint of the present invention can easily be seen, and they can be summed up as follows:
it is a universal joint as it can be used whatever material the joint and the main pipe are made of, it exhibits such features that the best seal between the parts to be connected is assured and has the advantage of the joint being easily and quickly disassembled from the main pipe for carrying out repairs.

Practical construction changes can be made to the invention withouth possibly getting out of the scope of the present invention as claimed hereinafter.

## Claims

1. A mechanically tightening joint for connection to a main pipe (10) in which the latter presents on its surface a through aperture (11) to which said joint (12) is to be applied, said joint being provided with an aperture (13), characterized in that said joint (12) comprises two blocks (14) that are each provided with a through-hole (15) through which a threaded pin (16) is placed, said pin being provided with mechanically tightening means (17) that are suited to secure said joint (12) to said main pipe (10).

2. A joint according to claim 1, characterized in that it comprises a seal (18) having a central aperture (19) that is suited to be interposed between the aperture (13) of joint (12) and the aperture (11) of the main pipe (10).

3. A joint as claimed in any of the preceding claims, characterized in that the mechanical tightening means (17) comprise: a tab (20) secured at an end of each of said threaded pins (16) and a screw nut or double screw nut (21) coupled to the other end of said pins (16), so that each tab (20) that is arranged against the inner part of the main pipe (10), is suited to tighten the latter against the joint (12) by tightening from outside the screw nut or double screw nut (21) on pins (16) against the upper part of said blocks (14).

4. A joint as claimed in any of the preceeding claims, characterized in that it can be arranged at any angle or in any position relative to the main pipe.
